## Europäisches Patentamt
## European Patent Office
## Office européen des brevets

(19)

(11) Veröffentlichungsnummer : **0 046 180**
**B1**

(12)

# EUROPÄISCHE PATENTSCHRIFT

(45) Veröffentlichungstag der Patentschrift :
28.11.84

(51) Int. Cl.³ : **G 05 B 19/23**, G 05 B 19/403

(21) Anmeldenummer : 81105191.1

(22) Anmeldetag : 04.07.81

(54) **Positionsregelsystem mit einer digitalen inkrementellen Messeinrichtung.**

(30) Priorität : 17.08.80 CH 6201/80

(43) Veröffentlichungstag der Anmeldung :
24.02.82 Patentblatt 82/08

(45) Bekanntmachung des Hinweises auf die Patenterteilung : 28.11.84 Patentblatt 84/48

(84) Benannte Vertragsstaaten :
**CH DE FR GB IT LI NL SE**

(56) Entgegenhaltungen :
DE-A- 2 746 886
DE-B- 2 758 525
US-A- 3 839 665
US-A- 4 021 650
US-A- 4 143 310
IBM TECHNICAL DISCLOSURE BULLETIN, Band 21, Nr. 3, August 1978, Seiten 913-914, New York, U.S.A., J.B. SLOAN et al. : " Computerized manipulator position sensing "
ELECTRONIQUE ET APPL. INDUSTRIELLES, Nr. 287, Juni 1980, Seiten 23-25, Paris, FR, H. LILEN: "Chaîne d'asservissement en position et/ou vitesse pour moteur à courant continu"

(73) Patentinhaber : **Maag-Zahnräder und -Maschinen Aktiengesellschaft**
**Hardstrasse 219**
**CH-8023 Zürich (CH)**

(72) Erfinder : **Donner, Meinrad**
**Bei der Kirche**
**CH-8855 Nuolen (CH)**

(74) Vertreter : **Menges, Rolf et al**
**PATENTANWÄLTE MENGES & PRAHL Erhardt-strasse 12**
**D-8000 München 5 (DE)**

## Beschreibung

Die Erfindung betrifft ein Positionsregelsystem mit zwei relativverschiebbaren Objekten, von denen eines mit einem Antrieb versehen ist, und mit einer digitalen inkrementellen Meßeinrichtung mit Richtungsdiskriminator zur Auswertung von Meßsignalen, wobei der Richtungsdiskriminator für jede Relativbewegungsrichtung der beiden Objekte eine Reihe von Meßimpulsen, von denen jeder einer der Flanken der Meßsignale entspricht, liefert und am Ausgang mit einer Interrupt-Logik verbunden ist, die andererseits mit einem internen Rechner verbunden ist, dessen Programmablauf durch jeden Ausgangsimpuls der Interrupt-Logik unterbrochen wird, um in Speicherregistern den Istwert auf den neuesten Stand zu bringen und nach der Unterbrechung die Soll-Istwert-Differenz und mit dieser eine erste Stellgröße zu bilden, die einem Stellglied zugeführt wird, das den Antrieb ansteuert.

Ein solches Positionsregelsystem, das aus der Druckschrift IBM Technical Disclosure Bulletin, Band 21, Nr. 3, August 1978, Seiten 913-914, bekannt ist, wird in einem Manipulator verwendet, um eine sehr genaue und stabile Positionswiederholbarkeit zu erzielen. Dem Manipulator werden mit Hilfe eines durch eine Bedienungsperson betätigten Steuerknüppels bestimmte Sollpositionen vorgegeben, die dann mit Hilfe des Positionsregelsystems eingeregelt werden. Die dabei durch den Vergleich zwischen Soll- und Istposition gebildete Stellgröße, die dem Stellglied zugeführt wird, ist lediglich eine Positionsstellgröße. Das bekannte Positionsregelsystem wäre daher nicht ohne weiteres bei Werkzeugmaschinen einsetzbar, bei denen aus Bearbeitungsgründen zumindest noch eine zweite Stellgröße benötigt wird, die das Anfahren von Sollpositionen mit vorgewählter Geschwindigkeit gestattet.

Aus der DE-A-2 746 886 ist die Regelung der Antriebsgrößen eines Elektromotors bekannt, bei der ein programmierbarer Mikroprozessor bereits beim Anlaufen des Motors die Winkelgeschwindigkeit und die Winkelbeschleunigung und daraus die an der Motorabtriebswelle angreifenden Lastmomente berechnet, wofür an den Mikroprozessor ein auf der Motorabtriebswelle angebrachter Absolut-Winkelschrittgeber angeschlossen ist. Würde man in dem aus der oben erwähnten IBM-Druckschrift bekannten Positionsregelsystem die digitale inkrementelle Meßeinrichtung mit Richtungsdiskriminator durch den aus der DE-A-2 746 886 bekannten Absolut-Winkelschrittgeber ersetzen oder auf der Abtriebswelle des Stellglieds des Positionsregelsystems den Absolut-Winkelschrittgeber anordnen und dessen Ausgang ebenfalls mit dem internen Rechner verbinden, dann würde eine solche Verwendung des Absolut-Winkelschrittgebers aber einen erhöhten mechanischen und elektronischen Aufwand bedeuten und wäre zusätzlich mit dem Nachteil verbunden, daß Absolut-Winkelschrittgeber an sich für Regelungszwecke zu ungenau sind, weil die Positioniergenauigkeit bei der Verwendung von solchen Absolutgebern mit zunehmender Verlagerung abnimmt, während diese Positioniergenauigkeit bei der Verwendung einer digitalen inkrementellen Meßeinrichtung mit Richtungsdiskriminator, d. h. eines inkrementellen Gebers, bei zunehmender Verlagerung konstant bleibt.

Aufgabe der Erfindung ist es, bei einem Positionsregelsystem der aus der IBM-Druckschrift bekannten Art mit möglichst wenig Aufwand an Elektronik den Positionsregelvorgang durch Berücksichtigung einer die Verschiebungsgeschwindigkeit angebenden Stellgröße weiter zu optimieren.

Diese Aufgabe ist durch die Erfindung dadurch gelöst, daß die Meßsignale 90° Phasenverschiebung aufweisen und daß die Interrupt-Logik einen Zeittakteingang aufweist, über den der Programmablauf in dem internen Rechner ebenfalls unterbrochen wird, wobei zwischen diesen Unterbrechungen in die Interrupt-Logik gelangende Meßimpulse ein Maß für die Verschiebungsgeschwindigkeit des angetriebenen Objekts sind, dessen entsprechendes Signal als zweite Stellgröße an das Stellglied abgegeben wird.

Die bei dem Positionsregelsystem nach der Erfindung erzeugte zweite Stellgröße ermöglicht dem Regelsystem, Positionen mit vorgewählter Geschwindigkeit anzufahren. Das ist beispielsweise bei einer Zahnradschleifmaschine wichtig, bei der beim Schruppen ein schneller Vorschub erwünscht ist. Die Gewinnung der zweiten Stellgröße erfolgt bei dem Positionsregelsystem nach der Erfindung auf sehr einfache Weise dadurch, daß die Geschwindigkeit von den während des Zeittaktinterrupts ankommenden Impulsen abgeleitet wird. Dadurch ist direkt eine Stellgröße vorrätig, und zwar die aktuellste, die es in dem Positionsregelsystem überhaupt gibt. Das Positionsregelsystem nach der Erfindung ist aus diesem Grund nicht nur sehr effizient und einfach, sondern auch sehr schnell.

Aus der DE-B-2 758 525 ist eine digitale inkrementelle Meßeinrichtung mit Richtungsdiskriminator bekannt, mittels welcher die Relativlage zweier zueinander verschieblicher Objekte bestimmt wird. Da das Auflösungsvermögen von solchen Meßeinrichtungen durch die Gitterkonstante der benutzten Präzisionsmassstäbe und durch die Zählfrequenz der Zähler begrenzt wird, wird bei der bekannten Meßeinrichtung zur Vermeidung einer hochauflösenden Maßstabteilung die Verfahrgeschwindigkeit der beiden relativ zueinander beweglichen Objekte erhöht. Um das zu ermöglichen, wird ein Vor-/Rückwärtszähler mit Richtungsdiskriminator benutzt, in welchem die von einem Abtastkopf, der die Maßstabteilung abtastet, gelieferten Signale, die eine Phasenverschiebung von 90° haben, nach dem Prinzip der Einfachauswertung gezählt werden, d. h. es wird nur die einem Wechsel des 90°-Signals entsprechende Flanke gezählt, während der das 0°-Signal den Wert 1 hat. Über eine Schaltung, deren innerer Aufbau der DE-B-2 758 525 nicht zu entnehmen ist, wird dann eine Unterteilung in eine beliebige Anzahl von codierten Zwischenwerten vorgenommen. Im Verhältnis zu dem Faktor, um den die Anzahl der Zwischenwerte größer ist als die der Meßsignale, kann dann die Maßstabteilung grober sein.

Für ein Positionsregelsystem, das zwei relativ zueinander verschiebbare Objekte enthält, von denen eines einen inkrementellen Maßstab mit feinster Unterteilung (z. B. 10 μm) trägt, kann eine solche Meßeinrichtung nicht verwendet werden, da bei der erforderlichen hohen Auflösung der Meßeinrichtung und bei großer Länge des inkrementellen Maßstabs Zähler mit großer Kapazität und ein hoher Schaltungsaufwand erforderlich würden.

Aus der US-A-4 021 650 ist es zwar bekannt, bei einem ähnlichen rechnergesteuerten Positionsregelsystem zwei zueinander phasenverschobene Meßsignale zu erzeugen. Hieraus ist aber nicht bekannt, mit einem Zeittakteingang den Programmablauf in einem internen Rechner zu unterbrechen und zwischen diesen Unterbrechungen in eine Interrupt-Logik gelangende Meßimpulse als ein Maß für die Verschiebungsgeschwindigkeit eines angetriebenen Objekts zu nehmen, dessen entsprechendes Signal als eine Geschwindigkeitsstellgröße an ein Stellglied abgegeben wird.

In der Ausgestaltung der Erfindung nach Anspruch 2 liefert der Rechner eine dritte Stellgröße, die ein Maß für die Beschleunigung des angetriebenen Objekts ist. Diese Stellgröße ermöglicht dem Regelsystem, Positionen mit vorgewählter Beschleunigung anzufahren.

In der Ausgestaltung der Erfindung nach Anspruch 3 wird sichergestellt, daß während Zeittaktunterbrechnungen an der Interrupt-Logik ankommende Meßimpulse nicht verloren gehen.

In der Ausgestaltung der Erfindung nach Anspruch 4 ist es möglich, z. B. aus Bearbeitungsgründen, der Stellgröße für die Verschiebungsgeschwindigkeit Vorrang zu geben, wenn ein schneller Vorschub erwünscht ist (z. B. beim Schruppen), während die genaue Position unwesentlich ist, oder der Stellgröße für die Position Vorrang zu geben, wenn die genaue Position wichtiger ist (z. B. beim Schlichten).

Ein Ausführungsbeispiel der Erfindung wird im folgenden unter Bezugnahme auf die Zeichnungen näher beschrieben. Es zeigt

Figur 1 ein Blockschaltbild des Positionsregelsystems nach der Erfindung und

Figuren 2a und 2b Diagramme zur Erläuterung der Arbeitsweise des Diskriminators.

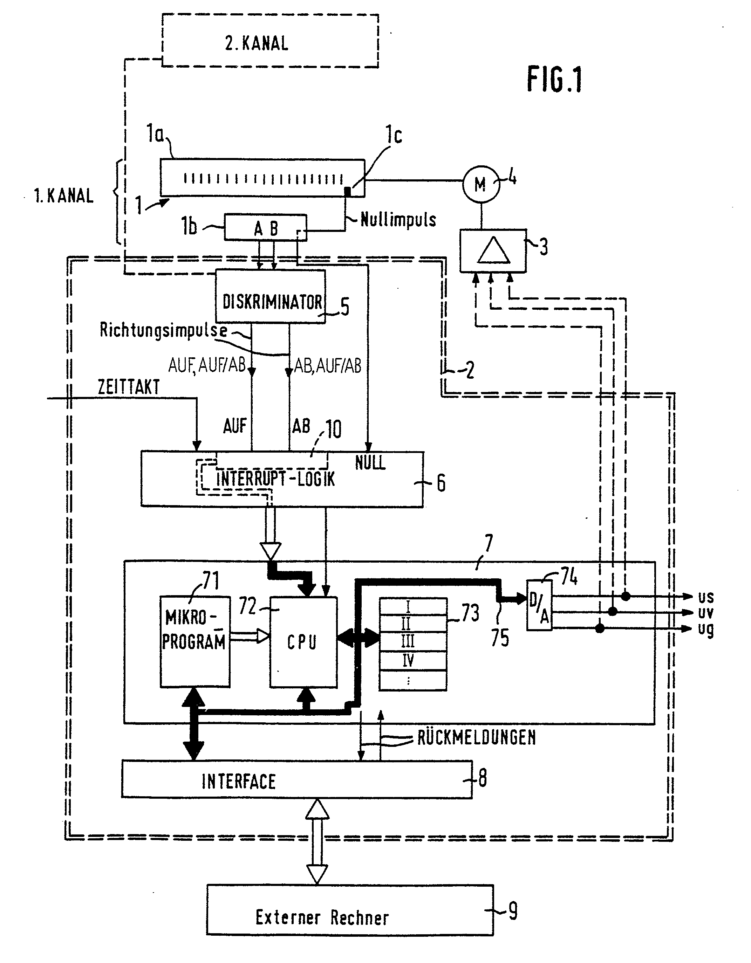

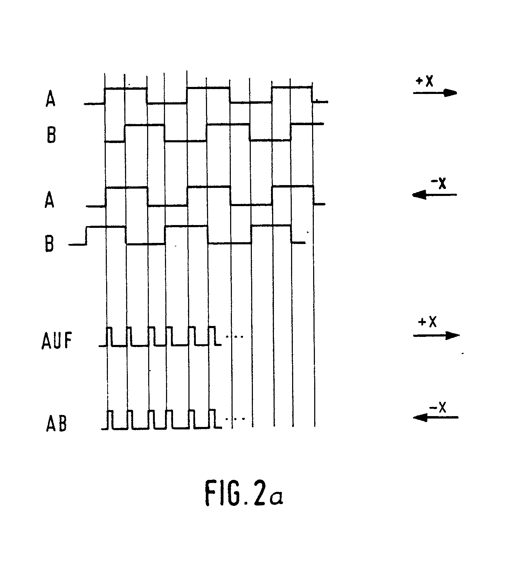

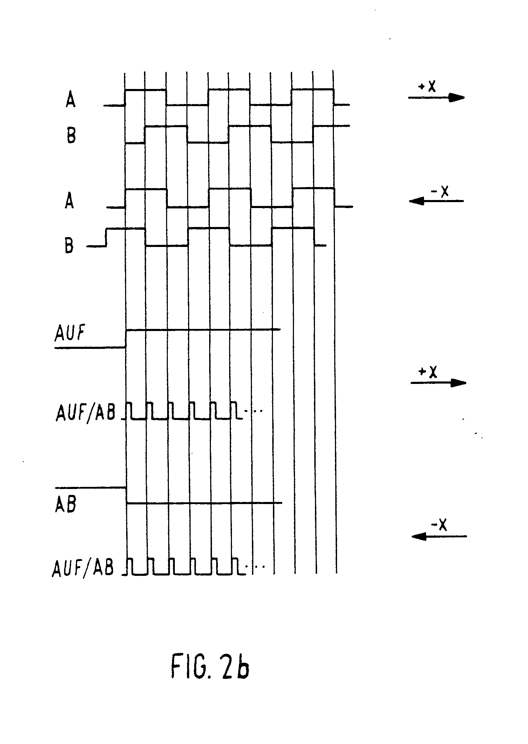

Figur 1 zeigt ein Blockschaltbild des Positionsregelsystems, in welchem die inkrementelle Meßeinrichtung zur Messung des Istwertes insgesamt mit der Bezugszahl 1, der Regler insgesamt mit der Bezugszahl 2, ein Stellglied mit der Bezugszahl 3 und ein Antrieb mit der Bezugszahl 4 bezeichnet ist. Die inkrementelle Meßeinrichtung 1 enthält einen inkrementellen Maßstab 1a, beispielsweise einen Präzisionsmaßstab, der bei einer Zahnradschleifmaschine eine Teilung von 10 μm haben kann. Die hier beschriebene Positionsregeleinrichtung ist aber nicht nur bei solchen Maschinen oder Werkzeugmaschinen allgemein einsetzbar, sondern überall dort, wo bei großen Weglängen eines zu verfahrenden Objekts eine hohe Auflösung erforderlich ist. Der inkrementelle Maßstab 1a ist an einem Schlitten befestigt, der durch den Antrieb 4 verfahren wird. Gegenüber dem inkrementellen Maßstab 1a ist ein Abtastkopf 1b angeordnet, der die Striche des Maßstabs abtastet und für jeden Strich zwei Meßsignale A und B (Fig. 2a und 2b) liefert, die in der Phase um 90° gegeneinander verschoben sind. In der einen Bewegungsrichtung des zu verfahrenden Objekts, in den Fig. 2a und 2b mit + x bezeichnet, eilt das Meßsignal A dem Meßsignal B um 90° vor, während in der umgekehrten Bewegungsrichtung, die in den Fig. 2a und 2b mit − x bezeichnet ist, das Meßsignal B dem Meßsignal A um 90° voreilt.

Der Abtastkopf 1b hat zwei Ausgänge, über die er die Meßsignale A und B an einen Diskriminator 5 abgibt.

Der Diskriminator 5 verdoppelt die Impulse der beiden Meßsignale A, B, indem er für jede ansteigende und jede abfallende Impulsflanke der Signale A und B einen definierten Meßimpuls erzeugt, und zwar getrennt für jede Bewegungsrichtung oder mit ungetrennten Bewegungsimpulsen AUF/AB und getrennten Richtungsimpulsen AUF, AB. In den Fig. 2a und 2b sind die Meßimpulse für die Bewegungsrichtung + x (d. h. in Aufwärtsrichtung des inkrementellen Maßstabs 1a bezüglich einer Nullmarke 1c) mit « AUF » bzw. « AUF, AUF/AB » bezeichnet, während sie für die Bewegungsrichtung − x (d. h. bezüglich der Nullmarke 1c abwärts) mit « AB » bzw. « AB, AUF/AB » bezeichnet sind.

Der Diskriminator 5 gibt diese Meßimpulse auf getrennten Kanälen, die mit « AUF » bzw. « AB » und mit AUF, AUF/AB bzw. AB, AUF/AB bezeichnet sind, an eine Interrupt-Logik 6 ab. Die Interrupt-Logik 6 ist mit einem insgesamt mit 7 bezeichneten Rechner verbunden.

Der Rechner 7 enthält ein nach Bedarf auswechselbares Mikroprogramm 71, eine Zentraleinheit (CPU) 72, Speicherregister 73 und einen bedarfsweise vorhandenen D/A-Wandler 74. Außerdem enthält er für seinen internen Datenverkehr erforderliche Datenbusse 75. Die von dem Diskriminator gelieferten Meßimpulse AUF, AB müssen zur Ermittlung des erreichten Positionsistwertes addiert bzw. subtrahiert werden, da jeder Impuls einer gefahrenen Wegstrecke entspricht. Zu diesem Zweck lösen die Meßimpulse über die Interrupt-Logik 6 eine Unterbrechung des in dem Rechner 7 laufenden Rechnerprogramms aus. Je nach der Bewegungsrichtung (+ x oder − x) wird in den Speicherregistern 73 ein Speicher, z. B. der Speicher I, inkrementiert oder dekrementiert, so daß der Inhalt des Speichers 1 dem gefahrenen Weg entspricht. Der Speicher kann deshalb als ein Software-Zähler für den Istwert aufgefaßt werden. Je nach Bedarf, d. h. je nach Anzahl der zu zählenden Impulse können mehrere Speicher I, II, III... durch das Mikroprogramm 71 miteinander verbunden werden, so daß große « Zählerlängen » realisiert werden können.

Der Positionssollwert ist in dem Speicherregister 73 gespeichert, beispielsweise in dem Speicher IV. Er ist über ein mit dem Rechner 7 verbundenes Interface 8 in diesen Speicher geladen worden. Wenn gerade keine Unterbrechung (Interrupt) durch eingehende AUF-, AB-Messimpulse in dem Rechner 7 vorliegt, wird unter der Steuerung des Mikroprogramms 71 die Soll-Istwert-Differenz gebildet und an den D/A-Wandler 74 abgegeben. Dieser liefert ein analoges Signal us, welches die Stellgröße darstellt und an das Stellglied 3 abgegeben wird, um das Objekt mit Hilfe des Antriebs 4 auf die genaue Position einzustellen. Die Interrupt-Logik 6 empfängt zusätzlich zu den Meßimpulsen einen Nullimpuls, welcher die Lage des Abtastkopfes 1b bezüglich des inkrementellen Maßstabs 1a festlegt.

Die Interrupt-Logik 6 weist weiter einen mit einem nicht dargestellten Taktgeber verbundenen Zeittakteingang auf, über den in periodischen Zeitabständen eine Zeittaktunterbrechung herbeigeführt wird, so daß mit Hilfe der in den Speicherregistern 73 gespeicherten Wege und deren Differenzen seit der vorangehenden Zeittaktunterbrechung die Geschwindigkeit der Bewegung des Maßstabes oder, mit Hilfe einer beispielsweise in dem Mikroprogramm 71 realisierten Differenziereinrichtung, dessen Beschleunigung errechnet werden kann, die dann über den D/A-Wandler 74 als analoge Signale uv bzw. ug abgegeben werden. Mit Hilfe dieser Signale kann das Stellglied 3 angesteuert werden, um mittels des Antriebs 4 das Objekt mit einer bestimmten Geschwindigkeit bzw. Beschleunigung in eine bestimmte Position zu verfahren.

Das Programm des Rechners 7 kann über das Interface 8 von einem weiteren, externen Rechner 9 her ausgetauscht werden. Es können deshalb je nach Bedarf andere Programmteile in den Mikroprogrammspeicher 71 geladen werden, die in ihrem Ablauf andere oder zusätzliche Funktionen erfüllen, z. B. Regelalgorithmen. Ausserdem kann über das Interface 8 und den externen Rechner 9 der Speicherinhalt des Rechners 7 zur Anzeige gebracht werden. Weiter ist über das Interface 8 und den externen Rechner 9 eine Synchronisation mit externen Vorgängen durch Rückmeldungen (z. B. Position erreicht, Geschwindigkeit erreicht, usw.) möglich.

Der Regler 2 bietet die Möglichkeit, mehrere unabhängig voneinander ablaufende Bewegungen zu erfassen und zu regeln. Es ist zu diesem Zweck lediglich erforderlich, eine entsprechende weitere Anzahl von Kanälen, die jeweils eine inkrementelle Meßeinrichtung, einen Antrieb und ein Stellglied enthalten, mit dem Diskriminator 5 zu verbinden, wie es in Fig. 1 für einen zweiten Kanal mit gestrichelten Linien angedeutet ist.

Der D/A-Wandler 74, kann, wie erwähnt, weggelassen werden, wenn das Stellglied oder Auswerteschaltungen, die die Stellgröße empfangen, diese in digitaler Form verarbeiten können.

Die Interrupt-Logik 6 kann wahlweise mit einen Zwischenspeicher 10 versehen sein, der während Zeittaktunterbrechungen ankommende Meßimpulse aus dem Diskriminator speichert, damit diese nicht verloren gehen. Nach Beendigung der Zeittaktunterbrechung werden diese Impulse dann von der Interrupt-Logik 6 verarbeitet.

Der externe Rechner 9 kann dazu verwendet werden, zwischen den drei Stellgrößen Prioritäten festzulegen. Das kann beispielsweise bei der Bearbeitung von Werkstücken erwünscht sein, da beim Schruppen mit schnellem Vorschub gefahren wird, während die Position unwesentlich ist, weshalb in diesem Fall der Stellgröße uv die Priorität gegenüber der Stellgröße us gegeben wird, während beim Schlichten umgekehrt vorgangen würde.

### Ansprüche

1. Positionsregelsystem mit zwei relativverschiebbaren Objekten (1a, 1b), von denen eines mit einem Antrieb (4) versehen ist, und mit einer digitalen inkrementellen Meßeinrichtung (1) mit Richtungsdiskriminator (5) zur Auswertung von Meßsignalen, wobei der Richtungsdiskriminator für jede Relativbewegungsrichtung der beiden Objekte eine Reihe von Meßimpulsen (AUF, AB), von denen jeder einer der Flanken der Meßsignale (A, B) entspricht, liefert und am Ausgang mit einer Interrupt-Logik (6) verbunden ist, die andererseits mit einem internen Rechner (7) verbunden ist, dessen Programmablauf durch jeden Ausgangsimpuls der Interrupt-Logik unterbrochen wird, um in Speicherregistern (73) den Istwert auf den neuesten Stand zu bringen und nach der Unterbrechung die Soll-Istwert-Differenz und mit dieser eine erste Stellgröße (us) zu bilden, die einem Stellglied (3) zugeführt wird, das den Antrieb (4) ansteuert, dadurch gekennzeichnet, daß die Meßsignale 90° Phasenverschiebung aufweisen und daß die Interrupt-Logik (6) einen Zeittakteingang aufweist, über den der Programmablauf in dem internen Rechner (7) ebenfalls unterbrochen wird, wobei zwischen diesen Unterbrechungen in die Interrupt-Logik (6) gelangende Meßimpulse (AUF, AB) ein Maß für die Verschiebungsgeschwindigkeit des angetriebenen Objekts (1a) sind, dessen entsprechendes Signal als zweite Stellgröße (uv) an das Stellglied (3) abgegeben wird.

2. System nach Anspruch 1, gekennzeichnet durch eine Einrichtung (71) zur Differenzierung der Verschiebungsgeschwindigkeit, die die Beschleunigung des angetriebenen Objekts (1a) als dritte Stellgröße (ug) liefert.

3. System nach Anspruch 1 oder 2, gekennzeichnet durch einen zwischen den Richtungsdiskriminator (5) und die Interrupt-Logik (6) geschalteten Zwischenspeicher (10), der die während Zeittaktunterbrechungen ankommenden Meßimpulse (AUF, AB) speichert, die anschließend von der Interrupt-Logik verarbeitet werden.

4. System nach Anspruch 2 oder 3, gekennzeichnet durch einen externen Rechner (9), der zwischen den drei Stellgrößen (us, uv, ug) Prioritäten festlegt.

## Claims

1. Position control system with two relatively displaceable objects (1a, 1b) one of which is provided with a drive (4), and with a digital incremental measuring device (1) with direction discriminator (5) for evaluation of measurement signals, and the direction discriminator produces for each relative movement direction of the two objects a series of measurement pulses (UP, DOWN) each of which corresponds to one of the edges of the measurement signals (A, B), said discriminator being connected at its output side to an interrupt logic element (6) which on the other hand is connected to an internal computer (7), whose programme sequence is interrupted by each output pulse of the interrupt logic element, so as to bring the actual value to the newest state in memory registers (73) and after the interruption to form the difference between desired value and actual value and with this a first correcting variable (us) which is fed to a correcting element (3) which actuates the drive (4), characterised in that the measurement signals have 90° phase displacement and that the interrupt logic element (6) has a timing pulse input by means of which the programme sequence in the internal computer (7) is also interrupted, and measurement pulses (UP, DOWN) arriving at the interrupt logic element (6) between these interruptions are a measure of the displacement speed of the driven object (1a), whose corresponding signal is delivered as a second correcting variable (uv) to the correcting element (3).

2. System according to claim 1, characterised by a device (71) for differentiation of the displacement speed, which delivers the acceleration of the driven object (1a) as a third correcting variable (ug).

3. System according to claim 1 or 2, characterised by a temporary storage (10) which is arranged between the direction discriminator (5) and the interrupt logic element (6) and which stores the measurement pulses (UP, DOWN) arriving during timing pulse interruptions, these pulses being then processed by the interrupt logic element.

4. System according to claim 2 or 3, characterised by an external computer (9) which determines priorities between the three correcting variables (us, uv, ug).

## Revendications

1. Dispositif d'asservissement de position comprenant deux objets (1a, 1b) mobiles en translation l'un par rapport à l'autre, dont l'un est muni d'un entraînement (4) et comprenant un dispositif de mesure incrémental numérique (1) avec discriminateur de sens (5) pour l'interprétation des signaux de mesure, le discriminateur de sens délivrant pour chaque sens de mouvement relatif des deux objets, une série d'impulsions de mesure (MONTANT/DESCENDANT) dont chacune correspond à l'un des fronts des signaux de mesure (A, B) et est connecté en sortie à une logique d'interruption (6), qui est d'un autre côté connecté à un ordinateur interne (7) dont le déroulement du programme est interrompu par chaque impulsion de sortie de la logique d'interruption, pour mettre la valeur réelle à jour à l'état le plus récent dans des registres de mémoire (73), puis après l'interruption former la différence valeur de consigne-valeur réelle et avec cette dernière, une première grandeur réglante (us) qui est envoyée à un organe final (3) qui commande l'entraînement (4), caractérisé en ce que les signaux de mesure présentent un décalage de phase de 90° et que la logique d'interruption présente une entrée de rythme temporel par l'intermédiaire de laquelle le déroulement du programme est également interrompu dans l'ordinateur interne, les impulsions de mesure (MONTANT, DESCENDANT) arrivant dans la logique d'interruption (6) entre ces interruptions constituant une mesure représentative de la vitesse de translation de l'objet entraîné (1a), dont le signal correspondant est transmis à l'organe final en qualité de deuxième grandeur réglante (uv).

2. Dispositif selon la revendication 1, caractérisé par un dispositif (71) servant à la différentiation de la vitesse de déplacement, qui délivre l'accélération de l'objet entraîné (1a) en qualité de troisième grandeur réglante (ug).

3. Dispositif selon la revendication 1 ou 2, caractérisé par une mémoire intermédiaire (10) connectée entre le discriminateur de sens (5) et la logique d'interruption (6) et qui mémorise les impulsions de mesure (MONTANT, DESCENDANT) qui arrivent pendant les interruptions du rythme temporel, qui sont ensuite traitées par la logique d'interruption.

4. Dispositif selon la revendication 2 ou 3, caractérisé par un ordinateur extérieur (9) qui détermine les priorités entre les trois grandeurs réglantes (us, uv, ug).

FIG.1

FIG. 2a

FIG. 2b